(19) Europäisches Patentamt
European Patent Office
Office européen des brevets

(11) **EP 2 966 808 A1**

(12) **EUROPEAN PATENT APPLICATION**
published in accordance with Art. 153(4) EPC

(43) Date of publication:
**13.01.2016 Bulletin 2016/02**

(51) Int Cl.:
***H04L 12/26*** (2006.01)

(21) Application number: **13876862.7**

(86) International application number:
**PCT/CN2013/072314**

(22) Date of filing: **07.03.2013**

(87) International publication number:
**WO 2014/134814 (12.09.2014 Gazette 2014/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventor: **LI, Gang
Shenzhen
Guangdong 518129 (CN)**

(74) Representative: **Isarpatent
Patentanwälte Behnisch Barth Charles
Hassa Peckmann & Partner mbB
Friedrichstrasse 31
80801 München (DE)**

(54) **TRAFFIC MATRIX COMPUTING METHOD AND DEVICE BASED ON CLASS OF SERVICE TRAFFIC INFORMATION**

(57)     The present invention relates to a class of service traffic information-based traffic matrix calculation method and apparatus. The corresponding method includes: obtaining, according to acquired class of service traffic on each link and a proportion of class of service traffic of each piece of end-to-end traffic passing through the link, maximum traffic that can be borne by each class of service type of the end-to-end traffic; accumulating the maximum traffic that can be borne by each class of service type to obtain an upper limit of maximum traffic of all class of service types of the end-to-end traffic; and accumulating upper limits of maximum traffic of all the class of service types of the end-to-end traffic on each link to obtain an upper limit of total traffic on each link, and using the upper limit of total traffic on each link as a constraint condition to obtain an end-to-end traffic matrix by means of calculation by using a linear programming method. The present invention utilizes acquired class of service traffic information to separately further reduce the number of solutions, so as to directly reduced solution space manner, and thereby implementing improvement of solution accuracy.

Obtain, according to acquired class of service traffic on each link and a proportion of class-of-service traffic of each piece of end-to-end traffic passing through the link, maximum traffic that can be borne by each class of service type of the end-to-end traffic

Accumulate the maximum traffic that can be borne by each class of service type to obtain an upper limit of maximum traffic of all class of service types of the end-to-end traffic

Accumulate upper limits of maximum traffic of all the class of service types of the end-to-end traffic on each link to obtain an upper limit of total traffic on each link, and use the upper limit of total traffic on each link as a constraint condition to obtain an end-to-end traffic matrix by means of calculation by using a linear programming method

FIG. 2

**Description**

**TECHNICAL FIELD**

The present invention relates to a class of service traffic information-based traffic matrix calculation method and apparatus, and belongs to the field of technologies of communication traffic statistics.

**BACKGROUND**

For a communications network, a traffic matrix indicates traffic flowing between all end-to-end node pairs on a network, and provides network operating personnel with valuable and global information about a current network state. The traffic matrix is necessary input of network management activities, such as network designing, traffic engineering, and capacity evaluation and optimization. However, although the traffic matrix is very important, it is fairly difficult to directly measure the traffic matrix, and reasons are: (1) perhaps there is a device that does not support traffic statistics (for example, the device does not support NETFLOW deployment); (2) traffic statistics on an entire network results in a huge amount of data, and overhead of related processing is huge; and (3) traffic statistics on the entire network requires routing and network configuration information, and overhead of related storage and analysis of a traffic matrix analyzer is huge. Therefore, as a more economical solution, the method of estimating a traffic matrix by using information, such as link traffic, receives extensive attention from the industry.

Traffic matrix estimation may be implemented by using multiple calculation technologies, in which one technology is that a traffic matrix is obtained by means of calculation by using local link traffic and Y=AX. Y is the link traffic, and may be obtained by using a general traffic data collecting method; and A is a routing matrix, which may be obtained by means of calculation by analyzing collected configuration information, such as an internal network routing protocol, or may be obtained by means of calculation by learning from a router. X is an end-to-end traffic to be computed. On a network, because the number of end-to-end traffics to be computed is far greater than the number of links, and A is an underdetermined matrix, which means that there are an infinite number of sets of solutions, resulting in an ill-conditioned linear inverse problem.

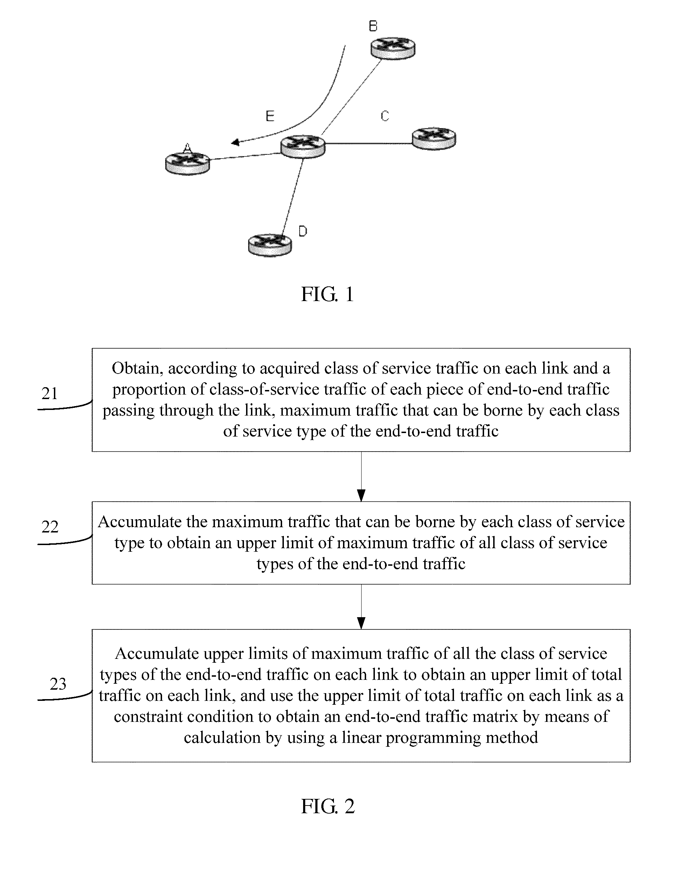

In order to solve for a more accurate end-to-end traffic matrix, it is provided in the prior art that: statistics about ingress-port-egress-port traffic on a device node, that is, an elbow-shaped component, are collected, for example, B→E→A traffic shown in FIG. 1, and then, traffic matrix estimation is performed based on traffic information of the elbow-shaped component, where an estimated traffic matrix needs to meet a constraint that traffic of all end-to-end traffic passing through the elbow-shaped component is consistent with traffic on the elbow-shaped component. However, a degree of underdetermining of the solution is still large (a rank of an equation is still far less than an unknown number to be computed), and solution accuracy needs to be further improved.

**SUMMARY**

The present invention provides a technical solution, in which a calculation result of a traffic matrix is relatively accurate, thereby improving calculation results of capacity planning and traffic engineering, and reducing a deployment risk. Accordingly, the present invention provides the following technical solutions:

A link class of service traffic information-based traffic matrix calculation method includes:

obtaining, according to acquired class of service traffic on each link and a proportion of class of service traffic of each piece of end-to-end traffic passing through the link, maximum traffic that can be borne by each class of service type of the end-to-end traffic;

accumulating the maximum traffic that can be borne by each class of service type to obtain an upper limit of maximum traffic of all class of service types of the end-to-end traffic; and

accumulating upper limits of maximum traffic of all the class of service types of the end-to-end traffic on each link to obtain an upper limit of total traffic on each link, and using the upper limit of total traffic on each link as a constraint condition to obtain an end-to-end traffic matrix by means of calculation by using a linear programming method.

A link class of service traffic information-based traffic matrix calculation apparatus includes:

a first maximum traffic calculation module, configured to obtain, according to acquired class of service traffic on each link and a proportion of class of service traffic of each piece of end-to-end traffic passing through the link, maximum traffic that can be borne by each class of service type of the end-to-end traffic;

a first maximum traffic upper limit calculation module, configured to accumulate the maximum traffic that can be borne by each class of service type to obtain an upper limit of maximum traffic of all class of service types of the end-to-end traffic; and

a first traffic matrix calculation module, configured to accumulate upper limits of maximum traffic of all the class of service types of the end-to-end traffic on each link to obtain an upper limit of total traffic on each link, and use the upper limit of total traffic on each link as a constraint condition to obtain an end-to-end traffic matrix by means of calculation by using a linear programming method.

An elbow-shaped component class of service traffic information-based traffic matrix calculation method includes:

obtaining, according to acquired class of service traffic on each elbow-shaped component and a proportion of class of service traffic of each piece of end-to-end traffic passing through the elbow-shaped component, maximum traffic that can be borne by each class of service type of the end-to-end traffic;

accumulating the maximum traffic that can be borne by each class of service type to obtain an upper limit of maximum traffic of all the class of service types of the end-to-end traffic; and

accumulating the upper limits of maximum traffic of all the class of service types of the end-to-end traffic on each elbow-shaped component to obtain an upper limit of total traffic on each elbow-shaped component, and using the upper limit of total traffic on each elbow-shaped component as a constraint condition to obtain an end-to-end traffic matrix by means of calculation by using a linear programming method.

An elbow-shaped component class of service traffic information-based traffic matrix calculation apparatus includes:

a second maximum traffic calculation module, configured to obtain, according to acquired class of service traffic on each elbow-shaped component and a proportion of class of service traffic of each piece of end-to-end traffic passing through the elbow-shaped component, maximum traffic that can be borne by each class of service type of the end-to-end traffic;

a second maximum traffic upper limit calculation module, configured to accumulate the maximum traffic that can be borne by each class of service type to obtain an upper limit of maximum traffic of all class of service types of the end-to-end traffic; and

a second traffic matrix calculation module, configured to accumulate upper limits of maximum traffic of all the class of service types of the end-to-end traffic on each elbow-shaped component to obtain an upper limit of total traffic on each elbow-shaped component, and use the upper limit of total traffic on each elbow-shaped component as a constraint condition to obtain an end-to-end traffic matrix by means of calculation by using a linear programming method.

According to the present invention, the number of solutions is further reduced separately by using known link class of service traffic information, elbow-shaped component class of service traffic information, and acquired class of service traffic information, so as to directly reduced solution space, and thereby implementing improvement of solution accuracy

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic structural diagram of end-to-end traffic passing through an elbow-shaped component according to the prior art;

FIG. 2 is a schematic flowchart of a link class of service traffic information-based traffic matrix calculation method according to a specific implementation manner of the present invention;

FIG. 3 is a schematic structural diagram of a simple network including 4 nodes according to a specific implementation manner of the present invention;

FIG. 4 is a schematic structural diagram of a link class of service traffic information-based traffic matrix calculation apparatus according to a specific implementation manner of the present invention;

FIG. 5 is a schematic flowchart diagram of an elbow-shaped component class of service traffic information-based traffic matrix calculation method according to a specific implementation manner of the present invention; and

FIG. 6 is a schematic structural diagram of an elbow-shaped component class of service traffic information-based traffic matrix calculation apparatus according to a specific implementation manner of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

A specific implementation manner of the present invention provides a link class of service traffic information-based traffic matrix calculation method, a basic principle of the calculation method is to perform estimation according to information as follows: a topology, a route, and link class of service traffic. Topology data includes a network node and a link; and a route refers to a sequence of links that are from a source node to a destination node and are passed through. For example, a simple network configured with routing protocol information, such as OSPF (Open Shortest Path First), and the route is obtained by means of calculation by using a shortest path algorithm; but, support of a situation of ECMP (Equal-Cost Multipath Routing, equal-cost multipath routing) shunting and converging needs to be considered. By using a traffic proportion on a link passed through by end-to-end traffic, and a size of class of service traffic on the link, an upper limit of end-to-end traffic corresponding to the class of service type may be determined, and then, with reference to an upper limit of traffic of each end-to-end class of service type, an upper limit of overall end-to-end traffic is determined, so that solution space of the end-to-end traffic is reduced, and solution accuracy is improved. The following describes the specific implementation manner in detail with reference to the accompanying drawings in the specification, and as shown in FIG. 2, a corresponding link class of service traffic information-based traffic matrix calculation method includes:

Step 21: Obtain, according to acquired class of service traffic on each link and a proportion of class of service traffic of each piece of end-to-end traffic passing through the link, maximum traffic that can be borne by each class of service type of the end-to-end traffic.

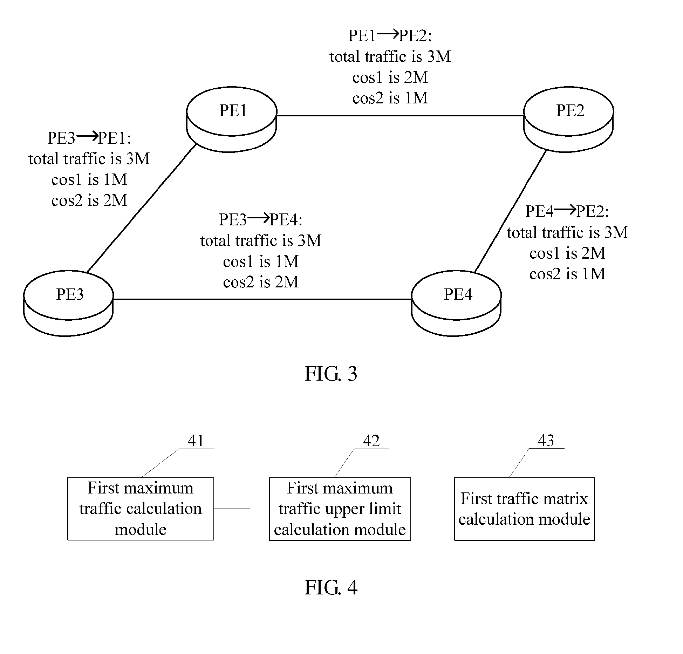

Specifically, a simple network shown in FIG. 3 is used as an example, where the network has been deployed with the OSPF protocol, and overhead (used to calculate a shortest path) on each link is 10. It is known that traffic borne on link PE3→PE1 is 3M, where traffic of CoS 1 is 1M, and traffic of CoS 2 is 2M; traffic borne on link PE1→PE2 is 3M, where traffic of CoS 1 is 2M, and traffic of CoS 2 is 1M; traffic borne on link PE3→PE4 is 3M, where traffic of CoS 1 is 1M, and traffic of CoS 2 is 2M; traffic borne on link PE4→PE2 is 3M, where traffic of CoS 1 is 2M, and traffic of CoS 2 is 1M; traffic on other links (PE1→PE3, PE2→PE1, PE4→PE3, PE2→PE4) that are not shown is 0M (the link is located between adjacent nodes, the traffic may be directly obtained by a device by collecting statistics, a corresponding traffic matrix may be obtained by collecting statistics about traffic between any node pair, and the traffic matrix includes the traffic between any node pair), and it is known that VPN 1 (a CoS type is 1) of PE3→PE1 is 1M, at least 2M of traffic exists on link PE3→PE2. In estimation, load sharing is considered to be performed in an equalized manner, that is, balancing is performed packet by packet.

First, known traffic of VPN 1 of PE3→PE1 is deducted, that is, the traffic of CoS 1 on link PE3→PE1 is 1M-1M=0M (because traffic type of VPN 1 is CoS 1), and total traffic is 3M-1M=2M. In this case, traffic borne on each link on the network is changed to:

total traffic on link PE3→PE1 is 2M, CoS 2 is 2M, and traffic of the other CoS types is 0M;
traffic borne on link PE1→PE2 is 3M, where traffic of CoS 1 is 2M, traffic of CoS 2 is 1M, and traffic of the other CoS types is 0M;
traffic borne on link PE3→PE4 is 3M, where traffic of CoS 1 is 1M, and traffic of CoS 2 is 2M; and traffic borne on link PE4→PE2 is 3M, where traffic of CoS 1 is 2M, and traffic of CoS 2 is 1M; and
traffic of the other links that are not shown is 0M.

Then, a shortest path between each node pair is obtained by means of calculation. According to a value of CoS traffic on a link passed through by the shortest path, maximum CoS traffic (that is, a maximum value of the CoS traffic) that can be borne by each node pair is determined, and further, the maximum value of the CoS traffic between each node pair is accumulated, so that a value of maximum traffic between each node pair is obtained.

Step 22: Accumulate the maximum traffic that can be borne by each class of service type to obtain an upper limit of maximum traffic of all the class of service types of the end-to-end traffic.

In FIG. 3, a route of PE3→PE2 passes through two paths: PE3, PE1, and PE2; and PE3, PE4, and PE2. A traffic splitting proportion of load sharing on the two paths is 1:1, an upper limit of traffic between a node pair PE3→PE2 is 2M by means of calculation, that is, unknown traffic of CoS 1 on link PE3→PE1 is 0M, so that traffic of CoS 1 does not exist between PE3→PE2. According to the same principle, it is determined, by using traffic of CoS 2 on path PE3→PE1→PE2, that an upper limit, being 1M, of traffic of CoS 2 may exist between PE3→PE2, and according to the same principle, it is determined, by using traffic on path PE3→PE4→PE2, that an upper limit, being 1M, of the traffic of CoS 2 may exist between PE3→PE2. Minimum traffic of CoS 2 on path PE3→PE1→PE2 and on path PE3→PE4→PE2 is selected, that is, maximum traffic of CoS 2 on each path is 1M, and according to 1:1 splitting, it is determined that an upper limit, being 2M, of traffic of CoS 2 exists between PE3→PE2.

Based on a calculation method same as that in the forgoing technical solution, it can be determined that between a node pair PE3→PE1, an upper limit of maximum borne traffic of CoS 1 is 1M, traffic of CoS 2 is 2M, and an upper limit of maximum borne traffic is 3M; it can be determined that between a node pair PE1→PE3, an upper limit of maximum borne traffic of CoS 1 is 0M, traffic of CoS 2 is 0M, and an upper limit of maximum borne traffic is 0M;it can be determined that between a node pair PE3→PE4, an upper limit of maximum borne traffic of CoS 1 is 1M, traffic of CoS 2 is 2M, and an upper limit of maximum borne traffic is 3M; it can be determined that between a node pair PE4→PE3, an upper limit of maximum borne traffic of CoS 1 is 0M, traffic of CoS 2 is 0M, and an upper limit of maximum borne traffic is 0M; it can be determined that between a node pair PE1→PE2, an upper limit of maximum borne traffic of CoS 1 is 2M, traffic of CoS 2 is 1M, and an upper limit of maximum borne traffic is 3M; it can be determined that between a node pair PE2→PE1, an upper limit of maximum borne traffic of CoS 1 is 0M, traffic of CoS 2 is 0M, and an upper limit of maximum borne traffic is 0M;it can be determined that between a node pair PE4→PE2, an upper limit of maximum borne traffic of CoS 1 is 2M, traffic of CoS 2 is 1M, and an upper limit of maximum borne traffic is 3M; it can be determined that between a node pair PE2→PE4, an upper limit of maximum borne traffic of CoS 1 is 0M, traffic of CoS 2 is 0M, and an upper limit of maximum borne traffic is 0M; it can be determined that between a node pair PE2→PE3, an upper limit of maximum borne traffic of CoS 1 is 0M, traffic of COS 2 is 0M, and an upper limit of maximum borne traffic is 0M; it can be determined that between a node pair PE1→PE4, an upper limit of maximum borne traffic of CoS 1 is 0M, traffic of COS 2 is 0M, and an upper limit of maximum borne traffic is 0M; and it can be determined that between a node pair PE4→PE1, an upper limit of maximum borne traffic of CoS 1 is 0M, traffic of CoS 2 is 0M, and an upper limit of maximum borne traffic is 0M.

Step 23: Accumulate upper limits of maximum traffic of all the class of service types of the end-to-end traffic on each link to obtain an upper limit of total traffic on each link, and use the upper limit of total traffic on each link as a constraint condition to obtain an end-to-end traffic matrix by means of calculation by using a linear programming method.

According to updated link traffic and new traffic between node pairs in combination with the constraint at least 2M of traffic (known in a network scenario) exists on PE3→PE2, and by using a linear programming method (another traffic matrix estimation method may also be used), a result of a traffic matrix of the network shown in FIG. 3 is obtained, and is:

PE3→PE1 is 2M (COS 1 is 1M, and COS 2 is 1M);
PE3→PE4 is 2M (COS 1 is 1M, and COS 2 is 1M);
PE4→PE2 is 2M (COS 1 is 2M, and COS 2 is OM);
PE1→PE2 is 2M (COS 1 is 2M, and COS 2 is OM);
PE3→PE2 is 2M (COS 2 is 2M, and COS 1 is OM); and
PE4→PE1 is 0M.

According to the link class of service traffic information-based traffic matrix calculation method provided in the specific implementation manner, solution acquisition accuracy is improved by adding a constraint, and if solution accuracy needs to be further improved, another piece of constraint information may be added, for example, known traffic matrix information of a VPN may be added. When part of or all of end-to-end traffic (such as VPN traffic) and corresponding class of service information are known, for each link that known end-to-end traffic passes through, end-to-end traffic borne on the link may be deducted first (class of service traffic on the link - known end-to-end class of service traffic borne on the link), remaining traffic is used as a constraint condition, and then, a traffic matrix is obtained by means of calculation according to the forgoing method; and when part of or all of end-to-end traffic (such as VPN traffic) is known and corresponding class of service information is unknown, constraint information that end-to-end traffic to be computed is greater than or equal to known end-to-end traffic is added, traffic that is obtained after the adding is used as a constraint condition, and then, a more accurate traffic matrix is obtained by means of solution according to the forgoing method.

For a complex network, the traffic matrix may be obtained by means of calculation by using a method of establishing a solution acquisition model, where a corresponding solution acquisition model includes a target model and a constraint model, and a corresponding target model includes:

$$\partial_{c,u,v,i} = \left| b_{c,i} \middle/ \left| F_{i,j} \right| - a_{c,u,v,i} * x_{c,u,v} \right|$$

$$minimize(\sum_{i \in L} \sum_{c \in C} \sum_{(u,v) \in F_{c,i}} \partial_{c,u,v,i})$$

$$minimize(\sum_{i \in L} \sum_{(u,v) \in F_i} \partial_{u,v,i})$$

a corresponding constraint model includes:

$$\sum_{(u,v) \in V} a_{u,v,i} * X_{u,v} = \sum_{c \in C} b_{c,i}$$

$$x_{c,u,v} \geq 0, x_{c,u,v} \leq \min M_c$$

$$X_{u,v} \geq 0, x_{u,v} \leq \sum_{c \in C} X_{c,u,v}$$

A proportion of the class of service traffic of each piece of end-to-end traffic passing through the link is obtained by means of calculation by using a formula: $\partial_{c,u,v,i} = |b_{c,i}/|F_{i,j}| - a_{c,u,v,i} * x_{c,u,v}|$, and formulas

$$minimize(\sum_{i \in L} \sum_{c \in C} \sum_{(u,v) \in F_{c,i}} \partial_{c,u,v,i}) \text{ and } minimize(\sum_{i \in L} \sum_{(u,v) \in F_i} \partial_{u,v,i})$$ are constraint conditions, where V represents a node sequence of a network, L represents a link sequence of the network, i represents a link and $i \in L$, C represents a traffic type sequence, u represents a traffic source node and $u \in V$, v represents a traffic destination node and $v \in V$, and $F_{c,i}$ represents a c type traffic sequence on a link i; $b_{c,i}$ represents a size of c type traffic on the link i and $c \in C$; $x_{u,v}$ represents end-to-end traffic from u to v, and is a variable to be computed; and $\partial_{e,u,v,i}$ represents a proportion of the c type traffic, which is from node u to node v and passes through the link i, to the total traffic;

the upper limit of maximum traffic of all the class of service types of the end-to-end traffic is obtained by means of calculation by using a formula: $m_{u,v,c} = b_{c,i}/\partial_{u,v,i}$, where $m_{u,v,c} \in M_c$, $m_{u,v,c}$ represents an upper limit of maximum traffic of all c types of the end-to-end traffic on the link, where the upper limit is obtained by means of calculation according to a traffic proportion of c type traffic, passing through each link, of a u-v node pair, and maximum traffic that can be borne by each c type of the end-to-end traffic; and $M_c$ is the upper limit of total traffic on each link; and

a formula for calculating of the end-to-end traffic matrix is $\sum_{(u,v) \in V} a_{u,v,i} * X_{u,v} = \sum_{c \in C} b_{c,i}$, and the constraint conditions include formulas: $X_{c,u,v} \geq 0$, $x_{c,u,v} \leq \min M_c$ and $X_{u,v} \geq 0$, $X_{u,v} \leq \sum_{c \in C} X_{c,u,v}$.

According to the technical solution provided in the specific implementation manner, the number of solutions is further reduced separately by using known link class of service traffic information and acquired class of service traffic information, so as to directly reduced solution space manner, and thereby implementing improvement of solution accuracy.

A specific implementation manner of the present invention further provides a link class of service traffic information-based traffic matrix calculation apparatus, and as shown in FIG. 4, the calculation apparatus includes:

a first maximum traffic calculation module 41, configured to obtain, according to acquired class of service traffic on each link and a proportion of class of service traffic of each piece of end-to-end traffic passing through the link, maximum traffic that can be borne by each class of service type of the end-to-end traffic;

a first maximum traffic upper limit calculation module 42, configured to accumulate the maximum traffic that can be borne by each class of service type to obtain an upper limit of maximum traffic of all class of service types of the end-to-end traffic; and

a first traffic matrix calculation module 43, configured to accumulate upper limits of maximum traffic of all class of service types of the end-to-end traffic on each link to obtain an upper limit of total traffic on each link, and use the upper limit of total traffic on each link as a constraint condition to obtain an end-to-end traffic matrix by means of calculation by using a linear programming method.

Preferably, the first traffic matrix calculation module 43 includes:

a first traffic calculation subunit, configured to subtract, when the end-to-end traffic and corresponding class of service information are known, end-to-end class of service traffic in borne end-to-end traffic passing through the link from the upper limit of total traffic on each link, and use remaining traffic as a constraint condition to obtain the end-to-end traffic matrix by means of calculation.

Preferably, the first traffic matrix calculation module 43 includes:

a second traffic calculation subunit, configured to add, when the end-to-end traffic is known and corresponding class of service information is unknown, to the upper limit of total traffic on each link, constraint information that the end-to-end traffic to be computed is greater than or equal to the known end-to-end traffic, and use traffic that is obtained after the adding as a constraint condition to obtain the end-to-end traffic matrix by means of calculation.

Preferably, a first traffic calculation submodule includes that:

in the first maximum traffic calculation module 43, the proportion of the class of service traffic of each piece of end-to-end traffic passing through the link is obtained by means of calculation by using a formula: $\partial_{c,u,v,i} = |b_{c,i}/|F_{i,j}| - a_{c,u,v,i} * X_{c,u,v}|$, and formulas $minimize\left(\sum_{i \in L} \sum_{c \in C} \sum_{(u,v) \in F_{c,i}} \partial_{c,u,v,i}\right)$ and $minimize\left(\sum_{i \in L} \sum_{(u,v) \in F_i} \partial_{u,v,i}\right)$ are constraint conditions, where V represents a node sequence of a network, L represents a link sequence of the network, i represents a link and $i \in L$, C represents a traffic type sequence, u represents a traffic source node and $u \in V$, v represents a traffic destination node and $v \in V$, and $F_{c,i}$ represents a c type traffic sequence on a link i; $b_{c,i}$ represents a size of c type traffic on the link i and $c \in C$; $X_{u,v}$ represents end-to-end traffic from u to v, and is a variable to be computed; and $\partial_{c,u,v,i}$ represents a proportion of the c type traffic, which is from node u to node v and passes through the link i, to the total traffic;

in the first maximum traffic upper limit calculation module 42, the upper limit of maximum traffic of all the class of service types of the end-to-end traffic is obtained by means of calculation by using a formula: $m_{c,u,v,i} = b_{c,i}/\partial_{u,v,i}$; where $m_{u,v,c} \in M_c$, $m_{u,v,c}$ represents an upper limit of maximum traffic of all c types of the end-to-end traffic on the link, where the upper limit is obtained by means of calculation according to a traffic proportion of c type traffic, passing through each link, of a u-v node pair, and maximum traffic that can be borne by each c type of the end-to-end traffic; and $M_c$ is the upper limit of total traffic on each link; and

in the first traffic matrix calculation module 43, a formula for calculating of the end-to-end traffic matrix is $\sum_{(u,v) \in V} a_{u,v,i} * X_{u,v} = \sum_{c \in C} b_{c,i}$, and the constraint conditions include formulas: $x_{c,u,v} \geq 0$, $x_{c,u,v} \leq \min M_c$ and $X_{u,v} \geq 0$, $x_{u,v} \leq \sum_{c \in C} X_{c,u,v}$.

The specific implementation manner of a processing function of each module included in the forgoing link class of service traffic information-based traffic matrix calculation apparatus is described in the forgoing method implementation manner, and no details are repeated herein.

According to the technical solution provided in the specific implementation manner, the number of solutions is further reduced separately by using known link class of service traffic information and acquired class of service traffic information, so as to directly reduced solution space manner, and thereby implementing improvement of solution accuracy.

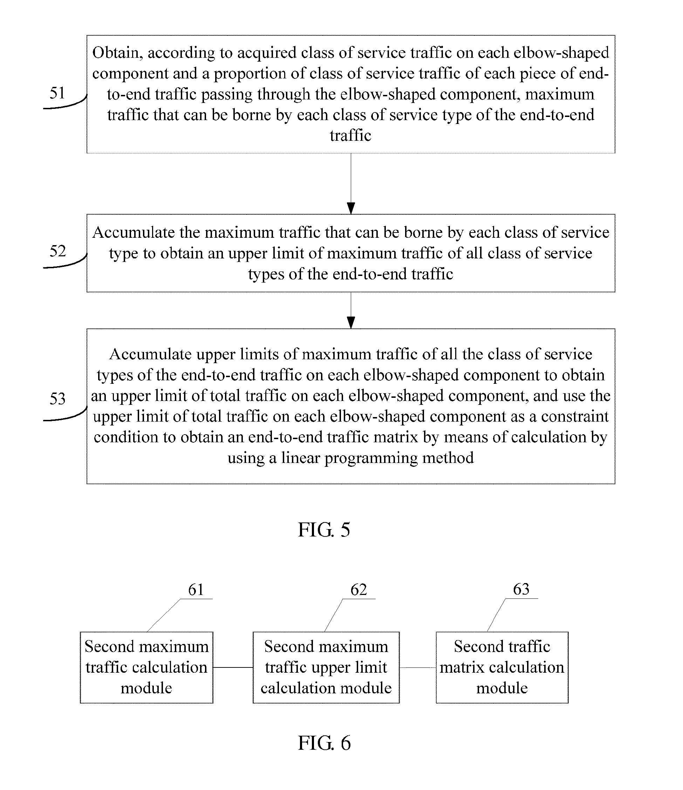

A specific implementation manner of the present invention further provides an elbow-shaped component class of service traffic information-based traffic matrix calculation method, and a basic principle of the calculation method is to perform estimation according to information as follows: a topology, a route, and class of service traffic on at least one elbow-shaped component. Topology data includes a network node or a link; and a route refers to a sequence of links that are from a source node to a destination node and are passed through. For example, for a simple network configured with routing protocol information, such as OSPF, and the route is obtained by means of calculation by using a shortest path algorithm; but, support of a situation of ECMP shunting and converging needs to be considered. It may be determined, by using an adjacent elbow-shaped component that an end-to-end route passes through, whether the end-to-end traffic passes through the elbow-shaped component, and a traffic proportion split on the elbow-shaped component may also be determined by using the traffic proportion on the elbow-shaped component that the end-to-end route passes through. The elbow-shaped component is formed by two egress ports, two ingress ports, and an intermediate node, and each link is formed by several class of service types (for example, one or more of 8 priorities). The following describes the specific implementation manner in detail with reference to the accompanying drawings in the specification, and as shown in FIG. 5, a corresponding elbow-shaped component class of service traffic information-based traffic matrix calculation method includes:

Step 51: Obtain, according to acquired class of service traffic on each elbow-shaped component and a proportion of class of service traffic of each piece of end-to-end traffic passing through the elbow-shaped component, maximum traffic that can be borne by each class of service type of the end-to-end traffic.

Step 52: Accumulate the maximum traffic that can be borne by each class of service type to obtain an upper limit of maximum traffic of all the class of service types of the end-to-end traffic.

Step 53: Accumulate the upper limits of maximum traffic of all the class of service types of the end-to-end traffic on each elbow-shaped component to obtain an upper limit of total traffic on each elbow-shaped component, and use the upper limit of total traffic on each elbow-shaped component as a constraint condition to obtain an end-to-end traffic matrix by means of calculation by using a linear programming method.

According to the elbow-shaped component class of service traffic information-based traffic matrix calculation method provided in the specific implementation manner, solution acquisition accuracy is improved by adding a constraint, and if solution accuracy needs to be further improved, another piece of constraint information may be added, for example, known traffic matrix information of a VPN may be added. When part of or all of end-to-end traffic (such as VPN traffic) and corresponding class of service information are known, end-to-end class of service traffic of borne end-to-end traffic passing through the elbow-shaped component is subtracted (class of service traffic on the elbow-shaped component - known end-to-end class of service traffic borne on the elbow-shaped component), remaining traffic is used as a constraint condition, and then, a traffic matrix is obtained by means of calculation according to the forgoing method; and when part of or all of end-to-end traffic (such as VPN traffic) is known and corresponding class of service information is unknown, constraint information that end-to-end traffic to be computed is greater than or equal to known end-to-end traffic is added, traffic that is obtained after the adding is used as a constraint condition, and then, the traffic matrix is obtained by means of calculation according to the forgoing method.

For a complex network, the traffic matrix may be obtained by means of calculation by using a method of establishing a solution acquisition model, where a corresponding solution acquisition model includes a target model and a constraint model, and a corresponding target model includes:

$$\partial_{u,v,i,j} = \left| \sum_{c \in C} b_{c,i,j} \Big/ F_{i,j} - a_{u,v,i,j} * x_{u,v} \right|$$

$$minimize\left( \sum_{i \in L} \sum_{(u,v) \in F_i} \partial_{u,v,i} + \sum_{(i,j) \in A} \sum_{(u,v) \in F_i} \partial_{u,v,i,j} \right)$$

a corresponding constraint model includes:

$$\sum_{(u,v) \in V} a_{u,v,i,j} * X_{u,v} = \sum_{c \in C} b_{c,i,j}$$

$$x_{c,u,v} \geq 0, x_{c,u,v} \leq \min M_c$$

$$X_{u,v} \geq 0, x_{u,v} \leq \sum_{c \in C} X_{c,u,v}$$

A proportion of the class of service traffic of each piece of end-to-end traffic passing through the elbow-shaped component is obtained by means of calculation by using a formula: $\partial_{u,v,i,j} = |\sum_{c \in C} b_{c,i,j}/F_{i,j} - a_{u,v,i,j} * x_{u,v}|$, and a formula

$$minimize\left( \sum_{i \in L} \sum_{(u,v) \in F_i} \partial_{u,v,i} + \sum_{(i,j) \in A} \sum_{(u,v) \in F_i} \partial_{u,v,i,j} \right)$$ is a constraint condition, where V represents a node sequence of a network, L represents an elbow-shaped component sequence of the network, i represents an elbow-shaped component and $i \in L$, C represents a traffic type sequence, u represents a traffic source node and $u \in V$, v represents a traffic destination node and $v \in V$, and $F_{c,i}$ represents a c type traffic sequence on an elbow-shaped component i; $b_{c,i}$ represents a size of c type traffic on the elbow-shaped component i and $c \in C$; $x_{u,v}$ represents end-to-end traffic from u to v, and is a variable to be computed; and $\partial_{c,u,v,i}$ represents a proportion of the c type traffic, which is from node u to node v and passes through the elbow-shaped component i, to the total traffic;

the upper limit of maximum traffic of all the class of service types of the end-to-end traffic is obtained by means of calculation by using a formula: $m_{u,v,c} = b_{c,i}/\partial_{u,v,i}$, where $m_{u,v,c} \in M_c$, $m_{u,v,c}$ represents an upper limit of maximum traffic of all c types of the end-to-end traffic on the elbow-shaped component, where the upper limit is obtained by means of calculation according to a traffic proportion of c type traffic, passing through each elbow-shaped component, of a u-v node pair, and the maximum traffic that can be borne by each c type of the end-to-end traffic; and $M_c$ is the upper limit of total traffic on each elbow-shaped component; and

a formula for calculating of the end-to-end traffic matrix is $\Sigma_{(u,v)\in V}\, a_{u,v,i,j} * X_{u,v} = \Sigma_{c\in C}\, b_{c,i,j}$, and the constraint conditions include formulas: $x_{c,u,v} \geq 0$, $x_{c,u,v} \leq \min M_c$ and $X_{u,v} \geq 0$, $x_{u,v} \leq \Sigma_{c\in C} X_{c,u,v}$.

According to the technical solution provided in the specific implementation manner, the number of solutions is further reduced separately by using known elbow-shaped component class of service traffic information and acquired class of service traffic information, so as to directly reduced solution space manner, and thereby implementing improvement of solution accuracy.

A specific implementation manner of the present invention further provides an elbow-shaped component class of service class of service traffic information-based traffic matrix calculation apparatus, and as shown in FIG. 6, the calculation apparatus includes:

a second maximum traffic calculation module 61, configured to obtain, according to acquired class of service traffic on each elbow-shaped component and a proportion of class of service traffic of each piece of end-to-end traffic passing through the elbow-shaped component, maximum traffic that can be borne by each class of service type of the end-to-end traffic;

a second maximum traffic upper limit calculation module 62, configured to accumulate the maximum traffic that can be borne by each class of service type to obtain an upper limit of maximum traffic of all class of service types of the end-to-end traffic; and

a second traffic matrix calculation module 63, configured to accumulate upper limits of maximum traffic of all the class of service types of the end-to-end traffic on each elbow-shaped component to obtain an upper limit of total traffic on each elbow-shaped component, and use the upper limit of total traffic on each elbow-shaped component as a constraint condition to obtain an end-to-end traffic matrix by means of calculation by using a linear programming method.

Preferably, the second traffic matrix calculation module 63 includes:

a third traffic calculation subunit, configured to subtract, when the end-to-end traffic and corresponding class of service information are known, end-to-end class of service traffic in borne end-to-end traffic passing through the elbow-shaped component from the upper limit of total traffic on each elbow-shaped component, and use remaining traffic as a constraint condition to obtain an end-to-end traffic matrix by means of calculation.

Preferably, the second traffic matrix calculation module 63 includes:

a fourth traffic calculation subunit, configured to add, when the end-to-end traffic is known and corresponding class of service information is unknown, to the upper limit of total traffic on each elbow-shaped component, constraint information that the end-to-end traffic to be computed is greater than or equal to the known end-to-end traffic, and use traffic that is obtained after the adding as a constraint condition to obtain an end-to-end traffic matrix by means of calculation.

Preferably, in the second maximum traffic calculation module, a proportion of the class of service traffic of each piece of end-to-end traffic passing through the elbow-shaped component is obtained by means of calculation by using

a formula: $\partial_{u,v,i,j} = |\Sigma_{c\in C}\, b_{c,i,j}/F_{i,j} - a_{u,v,i,j} * x_{u,v}|$, and a formula

$$minimize\left(\sum_{i\in L}\sum_{(u,v)\in F_i}\partial_{u,v,i} + \sum_{(i,j)\in A}\sum_{(u,v)\in F_i}\partial_{u,v,i,j}\right)$$

is a constraint condition, where V represents a node sequence of a network, L represents an elbow-shaped component sequence of the network, i represents an elbow-shaped component and $i \in L$, C represents a traffic type sequence, u represents a traffic source node and $u\in V$, v represents a traffic destination node and $v\in V$, and $F_{c,i}$ represents a c type traffic sequence on an elbow-shaped component i; $b_{c,i}$ represents a size of c type traffic on the elbow-shaped component i and $c\in C$; $x_{u,v}$ represents end-to-end traffic from u to v, and is a variable to be computed; and $\partial_{c,u,v,i}$ represents a proportion of the c type traffic, which is from node u to node v and passes through the elbow-shaped component i, to the total traffic;

in the second maximum traffic upper limit calculation module, the upper limit of maximum traffic of all the class of service types of the end-to-end traffic is obtained by means of calculation by using a formula: $m_{u,v,c}=b_{c,i}/\partial_{u,v,i}$; where $m_{u,v,c}\in M_c$, $m_{u,v,c}$ represents an upper limit of maximum traffic of all c types of the end-to-end traffic on the elbow-shaped component, where the upper limit is obtained by means of calculation according to a traffic proportion of c type traffic, passing through each elbow-shaped component, of a u-v node pair, and the maximum traffic that can be borne by each c type of the end-to-end traffic; and $M_c$ is the upper limit of total traffic on each elbow-shaped component; and

in the second traffic matrix calculation module, a formula for calculating of the end-to-end traffic matrix is $\sum_{(u,v)\in V} a_{u,v,i,j}$ * $X_{u,v} = \sum_{c\in C} b_{c,i,j}$, and the constraint conditions include formulas: $x_{c,u,v} \geq 0$, $x_{c,u,v} \leq \min M_c$ and $X_{u,v} \geq 0, x_{u,v} \leq \sum_{c\in C} X_{c,u,v}$.

The specific implementation manner of a processing function of each module included in the forgoing elbow-shaped component class of service traffic information-based traffic matrix calculation apparatus is described in the forgoing method implementation manner, and no details are repeated herein.

According to the technical solution provided in the specific implementation manner, the number of solutions is further reduced separately by using known elbow-shaped component class of service traffic information and acquired class of service traffic information, so as to directly reduced solution space manner, and thereby implementing improvement of solution accuracy.

It should be noted that, in the foregoing node embodiments, the module division is merely logical function division, but the present invention is not limited to the foregoing division, as long as corresponding functions can be implemented. In addition, specific names of the functional modules are merely provided for the purpose of distinguishing the units from one another, but are not intended to limit the protection scope of the present invention.

In addition, a person of ordinary skill in the art may understand that all or a part of the steps of the method embodiments may be implemented by a program instructing related hardware. The program may be stored in a computer readable storage medium. The storage medium may include: a read-only memory, a magnetic disk, or an optical disc.

The foregoing descriptions are merely exemplary implementation manners of the present invention, but are not intended to limit the protection scope of the present invention. Any variation or replacement readily figured out by a person skilled in the art within the technical scope disclosed in the embodiments of the present invention shall fall within the protection scope of the present invention. Therefore, the protection scope of the present invention shall be subject to the protection scope of the claims.

**Claims**

1. A link class of service traffic information-based traffic matrix calculation method, comprising:

   obtaining, according to acquired class of service traffic on each link and a proportion of class of service traffic of each piece of end-to-end traffic passing through the link, maximum traffic that can be borne by each class of service type of the end-to-end traffic;
   accumulating the maximum traffic that can be borne by each class of service type to obtain an upper limit of maximum traffic of all class of service types of the end-to-end traffic; and
   accumulating upper limits of maximum traffic of all the class of service types of the end-to-end traffic on each link to obtain an upper limit of total traffic on each link, and using the upper limit of total traffic on each link as a constraint condition to obtain an end-to-end traffic matrix by means of calculation by using a linear programming method.

2. The method according to claim 1, wherein the using the upper limit of total traffic on each link as a constraint condition to obtain an end-to-end traffic matrix by means of calculation by using a linear programming method comprises:

   when the end-to-end traffic and corresponding class of service information are known, subtracting end-to-end class of service traffic in borne end-to-end traffic passing through the link from the upper limit of total traffic on each link, and using remaining traffic as a constraint condition to obtain the end-to-end traffic matrix by means of calculation.

3. The method according to claim 1, wherein the using the upper limit of total traffic on each link as a constraint condition to obtain an end-to-end traffic matrix by means of calculation by using a linear programming method comprises:

   when the end-to-end traffic is known and corresponding class of service information is unknown, adding, to the upper limit of total traffic on each link, constraint information that end-to-end traffic to be computed is greater than or equal to the known end-to-end traffic, and using traffic that is obtained after the adding as a constraint condition to obtain the end-to-end traffic matrix by means of calculation.

4. The method according to any one of claims 1 to 3, wherein the proportion of the class of service traffic of each piece of end-to-end traffic passing through the link is obtained by means of calculation by using a formula: $\partial_{c,u,v,i} = |b_{c,i}/|F_{i,j}|$ - $a_{c,u,v,i}$ * $x_{c,u,v}|$, and formulas

$$minimize\left(\sum_{i \in L}\sum_{c \in C}\sum_{(u,v) \in F_{c,i}} \partial_{c,u,v,i}\right)$$ and $$minimize\left(\sum_{i \in L}\sum_{(u,v) \in F_i} \partial_{u,v,i}\right)$$ are constraint conditions, wherein V represents a node sequence of a network, L represents a link sequence of the network, i represents a link and $i \in L$, C represents a traffic type sequence, u represents a traffic source node and $u \in V$, v represents a traffic destination node and $v \in V$, and $F_{c,i}$ represents a c type traffic sequence on a link i, $b_{c,i}$ represents a size of c type traffic on the link i and $c \in C$; $x_{u,v}$ represents end-to-end traffic from u to v, and is a variable to be computed; and $\partial_{c,u,v,i}$ represents a proportion of the c type traffic, which is from node u to node v and passes through the link i, to the total traffic; the upper limit of maximum traffic of all the class of service types of the end-to-end traffic is obtained by means of calculation by using a formula: $m_{u,v,c} = b_{c,i}/\partial_{u,v,i}$, wherein $m_{u,v,c} \in M_c$, $m_{u,v,c}$ represents an upper limit of maximum traffic of all c types of the end-to-end traffic on the link, wherein the upper limit is obtained by means of calculation according to a traffic proportion of c type traffic, passing through each link, of a u-v node pair, and maximum traffic that can be borne by each c type of the end-to-end traffic; and $M_c$ is the upper limit of total traffic on each link; and a formula for calculating of the end-to-end traffic matrix is $\sum_{(u,v) \in V} a_{u,v} * X_{u,v} = \sum_{c \in C} b_{c,i}$, and the constraint conditions comprise formulas: $X_{c,u,v} \geq 0$, $x_{c,u,v} \leq minM_c$ and $X_{u,v} \geq 0$, $X_{u,v} \leq \sum_{c \in C} X_{c,u,v}$.

5.  A link class of service traffic information-based traffic matrix calculation apparatus, comprising:

    a first maximum traffic calculation module, configured to obtain, according to acquired class of service traffic on each link and a proportion of class of service traffic of each piece of end-to-end traffic passing through the link, maximum traffic that can be borne by each class of service type of the end-to-end traffic;
    a first maximum traffic upper limit calculation module, configured to accumulate the maximum traffic that can be borne by each class of service type to obtain an upper limit of maximum traffic of all class of service types of the end-to-end traffic; and
    a first traffic matrix calculation module, configured to accumulate upper limits of maximum traffic of all class of service types of the end-to-end traffic on each link to obtain an upper limit of total traffic on each link, and use the upper limit of total traffic on each link as a constraint condition to obtain an end-to-end traffic matrix by means of calculation by using a linear programming method.

6.  The apparatus according to claim 5, wherein the first traffic matrix calculation module comprises:

    a first traffic calculation subunit, configured to subtract, when the end-to-end traffic and corresponding class of service information are known, end-to-end class of service traffic in borne end-to-end traffic passing through the link from the upper limit of total traffic on each link, and use remaining traffic as a constraint condition to obtain the end-to-end traffic matrix by means of calculation.

7.  The apparatus according to claim 5, wherein the first traffic matrix calculation module comprises:

    a second traffic calculation subunit, configured to add, when the end-to-end traffic is known and corresponding class of service information is unknown, to the upper limit of total traffic on each link, constraint information that the end-to-end traffic to be computed is greater than or equal to the known end-to-end traffic, and use traffic that is obtained after adding as a constraint condition to obtain the end-to-end traffic matrix by means of calculation.

8.  The apparatus according to any one of claims 5 to 7, wherein, in the first maximum traffic calculation module, the proportion of the class of service traffic of each piece of end-to-end traffic passing through the link is obtained by means of calculation by using a formula: $\partial_{c,u,v,i} = |b_{c,i}/|F_{i,j}| - a_{c,u,v,i} * x_{c,u,v}$, and formulas

$$minimize\left(\sum_{i \in L}\sum_{c \in C}\sum_{(u,v) \in F_{c,i}} \partial_{c,u,v,i}\right)$$ and $$minimize\left(\sum_{i \in L}\sum_{(u,v) \in F_i} \partial_{u,v,i}\right)$$ are constraint conditions, wherein V represents a node sequence of a network, L represents a link sequence of the network, i represents a link and $i \in L$, C represents a traffic type sequence, u represents a traffic source node and $u \in V$, v represents a traffic destination node and $v \in V$, and $F_{c,i}$ represents a c type traffic sequence on a link i; $b_{c,i}$ represents a size of c type traffic on the link i and $c \in C$; $x_{u,v}$ represents end-to-end traffic from u to v, and is a variable to be computed; and $\partial - a_{c,u,v,i}$ represents a proportion of the c type traffic, which is from node u to node v and passes through the link i, to the total traffic; in the first maximum traffic upper limit calculation module, the upper limit of maximum traffic of all the class of service types of the end-to-end traffic is obtained by means of calculation by using a formula: $m_{u,v,c} = b_{c,i}/\partial_{u,v,i}$; wherein $m_{u,v,c} \in M_c$, $m_{u,v,c}$ represents an upper limit of maximum traffic of all c types of the end-to-end traffic on the link, wherein the upper limit is obtained by means of calculation according to a traffic proportion of c type traffic, passing through each link, of a u-v node pair, and maximum traffic that can be borne by each c type of the end-to-end traffic; and $M_c$ is the upper limit of total traffic on each link; and

in the first traffic matrix calculation module, a formula for calculating of the end-to-end traffic matrix is $\sum_{(u,v) \in V} a_{u,v,i} * X_{u,v} = \sum_{c \in C} b_{c,i}$, and the constraint conditions comprise formula: $x_{c,u,v} \geq 0$, $x_{c,u,v} \leq \min M_c$ and $X_{u,v} \geq 0$, $x_{u,v} \leq \sum_{c \in C} X_{c,u,v}$.

9. An elbow-shaped component class of service traffic information-based traffic matrix calculation method, comprising:

   obtaining, according to acquired class of service traffic on each elbow-shaped component and a proportion of class of service traffic of each piece of end-to-end traffic passing through the elbow-shaped component, maximum traffic that can be borne by each class of service type of the end-to-end traffic;
   accumulating the maximum traffic that can be borne by each class of service type to obtain an upper limit of maximum traffic of all class of service types of the end-to-end traffic; and
   accumulating upper limits of maximum traffic of all class of service types of the end-to-end traffic on each elbow-shaped component to obtain an upper limit of total traffic on each elbow-shaped component, and using the upper limit of total traffic on each elbow-shaped component as a constraint condition to obtain an end-to-end traffic matrix by means of calculation by using a linear programming method.

10. The method according to claim 9, wherein the using the upper limit of total traffic on each elbow-shaped component as a constraint condition to obtain an end-to-end traffic matrix by means of calculation by using a linear programming method comprises:

    when the end-to-end traffic and corresponding class of service information are known, subtracting end-to-end class of service traffic in borne end-to-end traffic passing through the elbow-shaped component from the upper limit of total traffic on each elbow-shaped component, and using remaining traffic as a constraint condition to obtain the end-to-end traffic matrix by means of calculation.

11. The method according to claim 9, wherein the using the upper limit of total traffic on each elbow-shaped component as a constraint condition to obtain an end-to-end traffic matrix by means of calculation by using a linear programming method comprises:

    when the end-to-end traffic is known and corresponding class of service information is unknown, adding, to the upper limit of total traffic on each elbow-shaped component, constraint information that end-to-end traffic to be computed is greater than or equal to the known end-to-end traffic, and using traffic that is obtained after the adding as a constraint condition to obtain the end-to-end traffic matrix by means of calculation.

12. The method according to any one of claims 9 to 11, wherein a proportion of the class of service traffic of each piece of end-to-end traffic passing through the elbow-shaped component is obtained by means of calculation by using a formula: $\partial_{u,v,i,j} = |\sum_{c \in C} b_{c,i,j}/F_{i,j} - a_{u,v,i,j} * x_{u,v}|$, and a formulas

$$minimize\left(\sum_{i \in L}\sum_{(u,v) \in F_i} \partial_{u,v,i} + \sum_{(i,j) \in A}\sum_{(u,v) \in F_i} \partial_{u,v,i,j}\right)$$ is a constraint condition, wherein V represents a node sequence of a network, L represents an elbow-shaped component sequence of the network, i represents an elbow-shaped component and $i \in L$, C represents a traffic type sequence, u represents a traffic source node and $u \in V$, v represents a traffic destination node and $v \in V$, and $F_{c,i}$ represents a c type traffic sequence on an elbow-shaped component i; $b_{c,i}$ represents a size of c type traffic on the elbow-shaped component i and $c \in C$; $x_{u,v}$ represents end-to-end traffic from u to v, and is a variable to be computed; and $\partial$- $a_{c,u,v,i}$ represents a proportion of the c type traffic, which is from node u to node v and passes through the elbow-shaped component i, to the total traffic;

the upper limit of maximum traffic of all the class of service types of the end-to-end traffic is obtained by means of calculation by using a formula: $m_{u,v,c} = b_{c,i}/\partial_{u,v,i}$, wherein $m_{u,v,c} \in M_c$, $m_{u,v,c}$ represents an upper limit of maximum traffic of all c types of the end-to-end traffic on the elbow-shaped component, wherein the upper limit is obtained by means of calculation according to a traffic proportion of c type traffic, passing through each elbow-shaped component, of a u-v node pair, and maximum traffic that can be borne by each c type of the end-to-end traffic; and $M_c$ is the upper limit of total traffic on each elbow-shaped component; and

a formula for calculating of the end-to-end traffic matrix is $\sum_{(u,v)\in V} a_{u,v,i,j} * X_{u,v} = \sum_{c\in C} b_{c,i,j}$, and the constraint conditions comprise formulas: $X_{c,u,v} \geq 0$, $x_{c,u,v} \leq \min M_c$ and $X_{u,v} \geq 0$, $x_{u,v} \leq \sum_{c\in C} X_{c,u,v}$.

13. An elbow-shaped component class of service traffic information-based traffic matrix calculation apparatus, comprising:

a second maximum traffic calculation module, configured to obtain, according to acquired class of service traffic on each elbow-shaped component and a proportion of class of service traffic of each piece of end-to-end traffic passing through the elbow-shaped component, maximum traffic that can be borne by each class of service type of the end-to-end traffic;

a second maximum traffic upper limit calculation module, configured to accumulate the maximum traffic that can be borne by each class of service type to obtain an upper limit of maximum traffic of all class of service types of the end-to-end traffic; and

a second traffic matrix calculation module, configured to accumulate upper limits of maximum traffic of all the class of service types of the end-to-end traffic on each elbow-shaped component to obtain an upper limit of total traffic on each elbow-shaped component, and use the upper limit of total traffic on each elbow-shaped component as a constraint condition to obtain an end-to-end traffic matrix by means of calculation by using a linear programming method.

14. The apparatus according to claim 13, wherein the second traffic matrix calculation module comprises:

a third traffic calculation subunit, configured to subtract, when the end-to-end traffic and corresponding class of service information are known, end-to-end class of service traffic in borne end-to-end traffic passing through the elbow-shaped component from the upper limit of total traffic on each elbow-shaped component, and use remaining traffic as a constraint condition to obtain an end-to-end traffic matrix by means of calculation.

15. The apparatus according to claim 13, wherein the second traffic matrix calculation module comprises:

a fourth traffic calculation subunit, configured to add, when the end-to-end traffic is known and corresponding class of service information is unknown, to the upper limit of total traffic on each elbow-shaped component, constraint information that the end-to-end traffic to be computed is greater than or equal to the known end-to-end traffic, and use traffic that is obtained after the adding as a constraint condition to obtain an end-to-end traffic matrix by means of calculation.

16. The apparatus according to any one of claims 13 to 15, wherein, in the second maximum traffic calculation module, a proportion of the class of service traffic of each piece of end-to-end traffic passing through the elbow-shaped component is obtained by means of calculation by using a formula: $\partial_{u,v,i,j} = |\sum_{c\in C} b_{c,i,j}/F_{i,j} - a_{u,v,i,j} * x_{u,v}|$, and a formula:

$$minimize(\sum_{i\in L} \sum_{(u,v)\in F_i} \partial_{u,v,i} + \sum_{(i,j)\in A} \sum_{(u,v)\in F_i} \partial_{u,v,i,j})$$ is a constraint condition, wherein V represents a node sequence of a network, L represents an elbow-shaped component sequence of the network, i represents an elbow-shaped component and $i \in L$, C represents a traffic type sequence, u represents a traffic source node and $u \in V$, v represents a traffic destination node and $v \in V$, and $F_{c,i}$ represents a c type traffic sequence on an elbow-shaped component i; $b_{c,i}$ represents a size of the c type traffic on the elbow-shaped component i and $c \in C$; $x_{u,v}$ represents end-to-end traffic from u to v, and is a variable to be computed; and $\partial$- $a_{c,u,v,i}$ represents a proportion of the c type traffic, which is from node u to node v and passes through the elbow-shaped component i, to the total traffic;

in the second maximum traffic upper limit calculation module, the upper limit of maximum traffic of all the class of service types of the end-to-end traffic is obtained by means of calculation by using a formula: $m_{u,v,c} = b_{c,i}/\partial_{u,v,i}$; wherein $m_{u,v,c} \in M_c$, $m_{u,v,c}$ represents an upper limit of maximum traffic of all c types of the end-to-end traffic on the elbow-shaped component, wherein the upper limit is obtained by means of calculation according to a traffic proportion of c type traffic, passing through each elbow-shaped component, of a u-v node pair, and maximum traffic that can be borne by each c type of the end-to-end traffic; and $M_c$ is the upper limit of total traffic on each elbow-shaped component; and

in the second traffic matrix calculation module, a formula for calculating of the end-to-end traffic matrix is $\sum_{(u,v)\in V} a_{u,v,i,j} * X_{u,v} = \sum_{c\in C} b_{c,i,j}$, and the constraint conditions comprise formulas: $x_{c,u,v} \geq 0$, $x_{c,u,v} \leq \min M_c$ and $X_{u,v} \geq 0$, $x_{u,v} \leq \sum_{c\in C} X_{c,u,v}$.

FIG. 1

FIG. 2

PE1→PE2:
total traffic is 3M
cos1 is 2M
cos2 is 1M

PE1

PE2

PE3→PE1:
total traffic is 3M
cos1 is 1M
cos2 is 2M

PE3→PE4:
total traffic is 3M
cos1 is 1M
cos2 is 2M

PE4→PE2:
total traffic is 3M
cos1 is 2M
cos2 is 1M

PE3

PE4

FIG. 3

| 41 | 42 | 43 |
|---|---|---|
| First maximum traffic calculation module | First maximum traffic upper limit calculation module | First traffic matrix calculation module |

FIG. 4

**EP 2 966 808 A1**

| | Obtain, according to acquired class of service traffic on each elbow-shaped component and a proportion of class of service traffic of each piece of end-to-end traffic passing through the elbow-shaped component, maximum traffic that can be borne by each class of service type of the end-to-end traffic |
|---|---|
| 51 | |

| | Accumulate the maximum traffic that can be borne by each class of service type to obtain an upper limit of maximum traffic of all class of service types of the end-to-end traffic |
|---|---|
| 52 | |

| | Accumulate upper limits of maximum traffic of all the class of service types of the end-to-end traffic on each elbow-shaped component to obtain an upper limit of total traffic on each elbow-shaped component, and use the upper limit of total traffic on each elbow-shaped component as a constraint condition to obtain an end-to-end traffic matrix by means of calculation by using a linear programming method |
|---|---|
| 53 | |

FIG. 5

| 61 | 62 | 63 |
|---|---|---|
| Second maximum traffic calculation module | Second maximum traffic upper limit calculation module | Second traffic matrix calculation module |

FIG. 6

# INTERNATIONAL SEARCH REPORT

| International application No. |
| --- |
| **PCT/CN2013/072314** |

**A.  CLASSIFICATION OF SUBJECT MATTER**

H04L 12/26 (2006.01) i

According to International Patent Classification (IPC) or to both national classification and IPC

**B.  FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS, CNTXT, VEN, CNKI: upper limit, elbow, flow, traffic, matrix, rank, level, maximum, link, add+, calculat???, account+

**C.  DOCUMENTS CONSIDERED TO BE RELEVANT**

| Category* | Citation of document, with indication, where appropriate, of the relevant passages | Relevant to claim No. |
| --- | --- | --- |
| A | CN 102136087 A (HUNAN UNIVERSITY), 27 July 2011 (27.07.2011), claim 1 and abstract | 1-16 |
| A | CN 101815035 A (JUNIPER NETWORKS INC.), 25 August 2010 (25.08.2010), the whole document | 1-16 |
| A | CN 101610246 A (BEIJING UNIVERSITY OF AERONAUTICS AND ASTRONAUTICS), 23 December 2009 (23.12.2009), the whole document | 1-16 |

☐ Further documents are listed in the continuation of Box C.    ☒ See patent family annex.

| | |
| --- | --- |
| *       Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 01 December 2013 (01.12.2013) | **19 December 2013 (19.12.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Fan** Telephone No.: (86-10) **62411240** |
| --- | --- |

Form PCT/ISA/210 (second sheet) (July 2009)

**INTERNATIONAL SEARCH REPORT**
Information on patent family members

International application No.

**PCT/CN2013/072314**

| Patent Documents referred in the Report | Publication Date | Patent Family | Publication Date |
|---|---|---|---|
| CN 102136087 A | 27.07.2011 | CN 102136087 B | 21.08.2013 |
| CN 101815035 A | 25.08.2010 | EP 2224649 B1 | 19.09.2012 |
| | | CN 101815035 B | 13.06.2012 |
| | | EP 2224649 A1 | 01.09.2010 |
| | | US 2010214913 A1 | 26.08.2010 |
| | | US 8218553 B2 | 10.07.2010 |
| | | US 2012207012 A1 | 16.08.2012 |
| CN 101610246 A | 23.12.2009 | CN 101610246 B | 11.07.2012 |

Form PCT/ISA/210 (patent family annex) (July 2009)